# EUROPÄISCHE PATENTSCHRIFT

(11) **EP 1 228 928 B1**
(45) Veröffentlichungstag und Bekanntmachung des Hinweises auf die Patenterteilung: **30.05.2007**
(21) Anmeldenummer: 02000175.6
(22) Anmeldetag: 09.01.2002
(51) Int. Cl.: B60R 21/16, C09D 183/00, D06M 15/643, D06N 3/00

(54) **Luftsackgewebe, Verfahren zu seiner Herstellung und Verwendung**
Airbag fabric and method for production thereof
Tissu d'airbag et sa production

(30) Priorität: 05.02.2001 DE 10105043
(43) Veröffentlichungstag der Anmeldung: 07.08.2002
(73) Patentinhaber: TRW Automotive GmbH, 73553 Alfdorf (DE)
(72) Erfinder: Ritter, Philipp, 73525 Schwäbisch Gmünd (DE)
(74) Vertreter: Bunke, Holger

(56) Entgegenhaltungen:
- EP-A- 0 535 649
- EP-A- 0 553 840
- EP-A- 0 646 672
- US-A- 5 208 097

## Beschreibung

Die Erfindung betrifft ein Verfahren zur Herstellung eines Luftsackgewebes insbesondere für Seiten-Airbags bei dem aus synthetischen Fasern und/oder Filamenten hergestellte Kett- und Schußfäden in solcher Dichte miteinander verwoben sind, daß die zwischen ihren Kreuzungspunkten freibleibenden Öffnungen eine mindestens mikroporöse Struktur im Rohgewebe ergeben.

Die zum Schutz von Fahrzeuginsassen bekannten, aufblasbaren Luftsäcke oder Airbags werden aus mindestens zwei Lagen eines für diesen Zweck gefertigten Spezialgewebes hergestellt, die entweder miteinander vernäht oder verwoben werden. Zwischen den mindestens zwei Gewebelagen ist mindestens eine Kammer gebildet, die durch Gasbefüllung bei einem Unfall aufgeblasen wird. Da das Aufblasen eines solchen Luftsacks innerhalb eines extrem kürzen Zeitraumes im Millisekundenbereich erfolgt, werden auf das Luftsackgewebe, insbesondere im Bereich der Verbindungszonen zwischen den oberen und unteren Gewebelagen, hohe Scherbelastungen ausgeübt, die zu einer Verschiebung der relativen Lage der Kett- und Schußfäden zueinander führen können, wodurch die zwischen den Kreuzungspunkten der Kett- und Schußfäden freibleibenden Öffnungen an besonders belasteten Stellen des Gewebes vergrößert, an anderen Stellen dagegen verkleinert werden. Besonders groß ist die Gefahr bei genähten Verbindungen zweier oder mehrerer Gewebelagen, aber sie besteht auch bei verwobenen Verbindungen. Durch die Bereiche mit vergrößerten Öffnungen findet eine deutlich erhöhte Gasabströmung statt, die, auch wegen der erhöhten Gastemperaturen, zu Gewebeschädigungen und letztlich zum Versagen des Luftsackes führen kann.

Bei gewöhnlichen, locker konstruierten Geweben, Gewirken und Gestricken ist es bekannt, diese instabilen textilen Flächengebilde schiebefest auszurüsten, indem man sie mit Polymerisaten, z.B. mit Polyacrylat- oder Polymethacrylat-Dispersionen, besprüht und nach Aushärtung dieser Polymerisate weiterverarbeitet.

Bei Luftsackgeweben ist jedoch eine vollständige Schiebefestmachung nicht angezeigt, weil dadurch die Weiterreißkraft, ein wichtiges Sicherheitskriterium des Gewebes, unzulässig verringert werden würde. Um hohe Weiterreißkraft-Werte zu erreichen, ist ein geringfügiges Verschieben der Kett- und Schußfäden relativ zueinander unerläßlich.

Der Erfindung liegt die Aufgabe zugrunde, ein Luftsackgewebe bereitzustellen, bei dem die Haftreibung zwischen Kett- und Schußfäden an den Kreuzungspunkten dieser beiden, die Gewebestruktur bildenden Fadensysteme so erhöht wird, daß zwar das Verschieben der Fäden unter Scherbeanspruchung deutlich erschwert, aber nicht vollständig unterbunden wird, so daß die Weiterreißkraft des Gewebes nicht unzulässig reduziert wird. Die erhöhte Haftreibung zwischen den Fäden soll auch nach einer Beschichtung oder Appretur erhalten bleiben, und das Luftsackgewebe soll trotz der erhöhten Haftreibung der Fäden eine ausreichende Flexibilität besitzen, damit ein aus dem Gewebe hergestellter Luftsack klein zusammengefaltet werden kann und in den heute üblichen Airbag-Modulen untergebracht werden kann. Schließlich soll die Erhöhung der Haftreibung zwischen den Fäden des Luftsackgewebes reproduzierbar und in dem für Kraftfahrzeuge geforderten Temperaturbereich zwischen -35 und +85°C temperaturwechselbeständig und 15 Jahre lang alterungsbeständig sein. Die zur Erhöhung der Haftreibung verwendeten Materialien müssen recyclingfähig sein.

Diese komplexe Aufgabe wird erfindungsgemäß durch das Verfahren gemäß Patentanspruch 1 gelöst.

Die Einlagerung der kristallinen und/oder amorphen Teilchen aus kationaktivem Siliciumdioxid führt zu einer Aufrauhung der Struktur des Gewebes und zu einer Erhöhung der Haftreibung der Kett- und Schußfäden an den Kreuzungspunkten der beiden Fadensysteme, ohne daß ein für die erforderliche Weiterreißkraft des Gewebes unerläßliches Verschieben der Fäden vollständig unterbunden würde.

Die kolloidale Kieselsäure besitzt eine Teilchengrößenverteilung, die für die vorwiegend mechanische Einlagerung der Teilchen in die mikroporöse Struktur des Luftsackgewebes besonders gut geeignet ist.

Die Kett- und/oder Schußfäden des Luftsackgewebes bestehen vorzugsweise aus Polyamid oder Polyester, wobei die Verwendung texturierter Garne wegen der von Haus aus größeren Haftreibung, verglichen mit untexturiertem Garn, bevorzugt wird.

Vor der Einlagerung der kristallinen und/oder amorphen Teilchen aus Kationaktivem Siliciumdioxid liegt das Rohgewebe vorzugsweise in Form eines zweilagigen, teilweise miteinander verwobenen oder vernähten Doppelgewebes vor.

Nach der Einlagerung der kristallinen und/oder amorphen Teilchen aus Kationaktivem Siliciumdioxid wird das Luftsackgewebe vorzugsweise mit einer Beschichtung oder Appretur aus polymerem Material versehen, die vorzugsweise aus einem Silikon besteht.

Die Haftreibung zwischen den beiden die Gewebestruktur bildenden Fadensysteme Kette und Schuß ist an den Kreuzungspunkten um mindestens 5 % größer als diejenige von unbehandeltem Gewebe gleicher Konstruktion.

Das Luftsackgewebe wird aus einem porösen oder mindestens mikroporösen Synthetik-Rohgewebe hergestellt und am Foulard naßchemisch ausgerüstet. Bei dem erfindungsgemäßen Verfahren wird eine Bahn des Rohgewebes durch eine wäßrige Dispersion kolloidaler Kieselsäure hindurchgeführt, danach getrocknet und später gegebenenfalls mit einem Polymer zusätzlich beschichtet. Die Gewebebahn wird dem Foulard in an sich bekannter Weise kontinuierlich über angetriebene Walzenpaare und nicht angetriebene Umlenkwalzen zugeführt, mit einer Geschwindigkeit von maximal 150 m/Min., überschüssige Dispersion wird mittels Quetschwalzen abgequetscht, und die Trocknung erfolgt ebenfalls in bekannter Weise in geschlossenen oder offenen Systemen, unter Zufuhr von Wärme.

Die verwendete wäßrige Dispersion weist vorzugsweise eine Konzentration von 0,5 bis 35 Gew.-% Kieselsäure auf. Der pH-Wert der wäßrigen Dispersion liegt vorzugsweise im sauren Bereich, ist also kleiner als 7.

Besonders vorteilhaft ist es, wenn die wäßrige Dispersion mit kationischen und/oder nicht-ionischen Appreturmitteln verträglich ist, weil dann dem Tauchbad im Foulard gleichzeitig noch weitere Textilhilfsmittel zugegeben werden können.

Vorzugsweise wird das mit der wäßrigen Dispersion behandelte Luftsackgewebe nach dem Trocknen mit einem Polymer imprägniert und/oder laminiert, vorzugsweise mit einem Silikon.

Das Luftsackgewebe wird vorzugsweise zur Herstellung von Seiten-Airbags verwendet.

Bei der Gewebeprüfung kann das Maß des Widerstandes, den die Gewebestruktur dem Verschieben der Fadenkreuzungen entgegensetzt, näherungsweise durch die Bestimmung der Kammausziehkraft gemäß DIN 53 857 T1 ermittelt werden. Die Größe der Kammausziehkraft wird durch die Haftreibung zwischen den beiden Fadensystemen Kette und Schuß an ihren Kreuzungspunkten bestimmt. Je höher diese Haftreibung ist, um so größer ist der Widerstand gegen ein Verschieben der Gewebestruktur. Die erfindungsgemäße Verbesserung der Haftreibung zwischen Kette und Schuß an ihren Kreuzungspunkten wird nur bis zu einem Grad bewirkt, bei dem die verwendeten kristallinen und/ oder amorphen Teilchen die mikroporösen Öffnungen nahezu vollständig ausfüllen.

Die nachfolgende Graphik gibt die relative Kammausziehkraft des erfindungsgemäß eingesetzten Rohgewebes (Standard) aus Polyamid-6.6 und des erfindungsgemäß behandelten Luftsackgewebes (Kieselsäure) bei Verwendung unterschiedlich konzentrierter wäßriger Kieselsäuredispersionen (5, 10, 15 und 20 Gew.-%) wieder. Aus der Graphik wird deutlich, daß bei einer Behandlung des Luftsackgewebes mit einer 5 %igen Kieselsäuredispersion bereits 60 % der maximalen Kammausziehkraft erreicht werden, während mit einer 10 %igen Dispersion 70 % der maximalen Kammausziehkraft erreicht werden, mit einer 15 %igen Dispersion bereits mehr als 95 % und mit einer 20 %igen Dispersion fast 98 % der maximalen Kammausziehkraft.

Aus diesen Werten ergibt sich, daß es mit Hilfe der Erfindung tatsächlich gelingt, die Haftreibung zwischen Kett- und Schußfäden deutlich zu erhöhen, ohne die Verschiebbarkeit der Fadenkreuzungen unter Scherbeanspruchung vollständig zu unterbinden, so daß die Weiterreißkraft erhalten bleibt. Das erfindungsgemäße hergestellte Luftsackgewebe läßt sich mit Silikon und anderen Polymeren beschichten und behält gleichwohl eine ausreichende Flexibilität, um klein zusammengefaltet zu werden. Die erreichbare Erhöhung der Haftreibung ist reproduzierbar, das Produkt ist zwischen -35°C und +85°C ausreichend temperaturwechselbeständig und alterungsbeständig, und die verwendeten kristallinen und/oder amorphen Teilchen, vorzugsweise SiO₂, sind recyclingfähig.

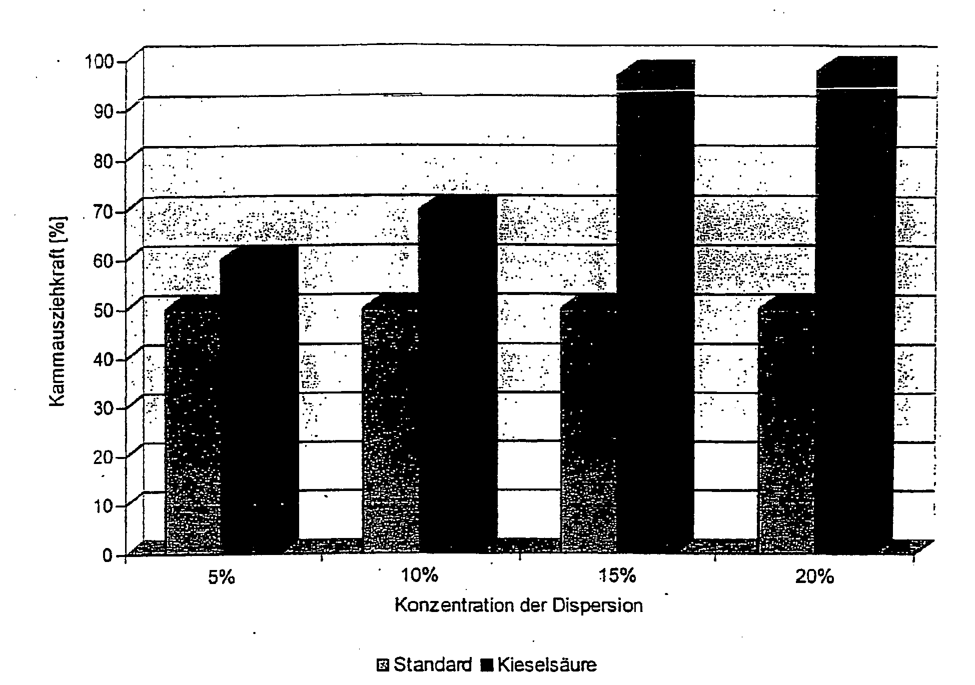

## Patentansprüche

1. Verfahren zur Herstellung eines Luftsackgewebes, insbesondere für Seiten-Airbags, mit den folgenden Schritten:
- ein unbeschichtetes Flachgewebe, bei dem aus synthetischen Fasern und/oder Filamenten hergestellte Kett- und Schußfäden in solcher Dichte miteinander verwoben sind, daß die zwischen ihren Kreuzungspunkten freibleibenden Öffnungen eine mindestens mikroporöse Struktur ergeben, wird als Rohgewebe bereitgestellt,
- das mindestens mikroporöse Synthetik-Rohgewebe wird am Foulard naßchemisch ausgerüstet, indem eine Bahn des Rohgewebes durch eine wäßrige Dispersion kolloidaler Kieselsäure hindurchgeführt wird, wobei kristalline und/oder amorphe Teilchen aus kationaktivem Siliciumdioxid in mindestens einem Teil der zwischen den Kreuzungspunkten von Kette und Schuß befindlichen Öffnungen mechanisch eingelagert werden,
- das naßchemisch ausgerüstete Luftsackgewebe wird anschließend getrocknet.

2. Verfahren nach Anspruch 1, **dadurch gekennzeichnet, daß** die wäßrige Dispersion eine Konzentration von 0,5 bis 35 Gew.% Kieselsäure aufweist.

3. Verfahren nach Anspruch 1 oder 2, **dadurch gekennzeichnet, daß** der pH-Wert der wäßrigen Dispersion < 7 beträgt.

4. Verfahren nach einem der Ansprüche 1 bis 3, **dadurch gekennzeichnet, daß** eine wäßrige Dispersion verwendet wird, die mit kationischen und/oder nicht-ionischen Appreturmitteln verträglich ist.

5. Verfahren nach einem der Ansprüche 1 bis 4, **dadurch gekennzeichnet, daß** das mit der wäßrigen Dispersion behandelte Luftsackgewebe nach dem Trocknen mit einem Polymer imprägniert und/oder laminiert wird.

6. Verfahren nach Anspruch 5, **dadurch gekennzeichnet, daß** das Polymer ein Silikon ist.

## Claims

1. A method of manufacturing an airbag fabric, in particular for side-impact airbags, comprising the following steps:
- an uncoated flat fabric in which warp and weft threads made of synthetic fibers and/or filaments are woven together at such a density that the openings remaining between their intersections yield an at least microporous structure, is provided as a raw fabric;
- the at least microporous synthetic raw fabric is finished wet-chemically on a padding machine by passing a web of the raw fabric through an aqueous dispersion of colloidal silicic acid, with crystalline and/or amorphous particles of cation-active silica being mechanically incorporated in at least some of the openings situated between the intersections of warp and weft;
- the wet-chemically finished airbag fabric is then dried.

2. The method according to Claim 1, **characterized in that** the aqueous dispersion has a concentration of 0.5 to 35% by weight of silicic acid.

3. The method according to Claim 1 or 2, **characterized in that** the pH value of the aqueous dispersion is < 7.

4. The method according to any of Claims 1 to 3, **characterized in that** an aqueous dispersion is used which is compatible with cationic and/or non-ionic finishing agents.

5. The method according to any of Claims 1 to 4, **characterized in that** after the drying step, the airbag fabric treated with the aqueous dispersion is impregnated and/or laminated with a polymer.

6. The method according to Claim 5, **characterized in that** the polymer is a silicone.

## Revendications

1. Procédé de fabrication d'un tissu de coussin à gaz, en particulier pour un airbag latéral, présentant les étapes suivantes :
- en tant que tissu brut est fourni un tissu plat non enduit, dans lequel des fils de chaîne et des fils de trame, réalisés en fibres et/ou de filaments synthétiques, sont tissés les uns aux autres dans une densité telle que les ouvertures subsistant entre leurs points de croisement donnent une structure au moins microporeuse,
- le tissu brut synthétique au moins microporeux est apprêté chimiquement à voie humide sur un foulard en faisant passer un lé du tissu brut à travers une dispersion aqueuse d'acide silique colloïdale, des particules cristallines et/ou amorphes de silice cationique étant mécaniquement incorporées dans une partie des ouvertures se trouvant entre les points de croisement de la chaîne et de la trame,
- le tissu de coussin à gaz apprêté chimiquement à voie humide est ensuite séché.

2. Procédé selon la revendication 1, **caractérisé en ce que** la dispersion aqueuse présente une concentration de 0,5 à 35 % en poids d'acide silique.

3. Procédé selon la revendication 1 ou 2, **caractérisé en ce que** la valeur pH de la dispersion aqueuse est <7.

4. Procédé selon l'une des revendications 1 à 3, **caractérisé en ce qu'**on utilise une dispersion aqueuse qui est compatible à des moyens d'apprêt cationiques et/ou non ioniques.

5. Procédé selon l'une des revendications 1 à 4, **caractérisé en ce qu'**après le séchage, le tissu de coussin à gaz traité avec la dispersion aqueuse est imprégné et/ou laminé avec un polymère.

6. Procédé selon la revendication 5, **caractérisé en ce que** le polymère est une silicone.
